# EUROPEAN PATENT APPLICATION

(11) **EP 1 475 855 A1**
(43) Date of publication of application: **10.11.2004**
(21) Application number: 03705150.5
(22) Date of filing: 14.02.2003
(51) Int. Cl.: H01M 4/70, H01M 4/74, H01M 4/66

(54) **SECONDARY BATTERY-USE POLE PLATE MATERIAL**

(30) Priority: 15.02.2002 JP 2002037749; 24.05.2002 JP 2002150688
(71) Applicant: Iwate Tokyo Wire Works, Ltd, Tokyo 144-0056 (JP)
(72) Inventor: CHIDA, Hayao, Isawa-gun, Iwate 029-4201 (JP); WATANABE, Tamihiro, Isawa-gun, Iwate 023-0402 (JP)
(74) Representative: Schrimpf, Robert
(86) International application number: PCT/JP2003/001538
(87) International publication number: WO 2003/069704

(57) **Abstract**

An electrode sheet material for use in secondary batteries is provided. According to the present invention, battery properties can be improved and its economy is excellent. Punching is carried out on steel or copper sheet (foil), and after nickel plating, press-forming to form projections on the surface, e.g., embossing is carried out so that a three-dimensional structure is prepared. Optionally, broken-through portions may be provided in the foot portion.

## Description

### Technical Field

The present invention relates to an electrode sheet material for use in secondary batteries. More specifically, the present invention relates to a sheet material for secondary battery electrodes having a three-dimensional structure with an increased surface area.

### Background Art

In recent years, electrical equipment, and particularly, small-sized electronic equipment such as mobile phones, have come to be widely used. The demand for electric power sources therefor has also been increasing, while an improvement in the performance of secondary batteries is also required. Intensive research for improved secondary batteries is being carried out. More recently, a variety of materials for use in a secondary battery with a high level of output and a high level of capacity are under development.

Some examples of electrode components of a secondary battery include negative or positive electrodes of Ni-molecular hydrogen batteries and substrate plates of Ni-Cd batteries. Such an electrode of a secondary battery can be explained as follows by taking as an example a positive electrode of Ni-molecular hydrogen battery. There are two types of electrodes; one is a sintered electrode and the other is non-sintered one, i.e., a paste electrode. There is room for further research on a positive electrode in order to increase the capacity of a battery because a positive electrode has a lower filling density of active material but occupies a larger percent of the volume within a battery than a negative electrode.

### 1) Sintered Electrodes:

Sintered electrodes are electrodes comprising a punched metal plate with a sintered layer of a nickel powder. An active material predominantly comprised of nickel hydroxide is coated onto the sintered layer.

In general, a sintered electrode is prepared by mixing nickel powder with water, applying the resulting slurry onto both surfaces of a punched metal plate, and performing sintering at 1000° C. The resulting electrode having a sintered layer is immersed in an aqueous solution of nickel salt and then in an alkaline aqueous solution to convert the nickel into nickel hydroxide.

The pore size of the sintered layer is about 10 microns, and the layer has superior ability to collect electric currents. However, since the porosity thereof is as low as about 75%, it is difficult to achieve a high density of active materials in the layer.

### 2) Non-sintered Electrodes (Paste Coating Type):

A non-sintered electrode is an electrode in which an active material (nickel hydroxide) is applied to a substrate which is comprised of a sponge-like nickel structure (a foamed nickel body).

A non-sintered electrode is manufactured by mixing an active material mainly comprising nickel hydroxide to form a paste, applying the resulting paste to the substrate, drying the paste, and then performing pressing of the substrate to obtain a predetermined size.

The foamed nickel body is prepared by forming foamed polyurethane into the form of a plate or sheet, immersing the foamed polyurethane plate (sheet) in a carbon powder suspension, and drying the body to deposit on it an electrically conductive carbon on which it is possible to carry out electroplating of the body. After completion of electroplating with nickel, the polyurethane plate (sheet) is burned off, and if necessary, the resulting foamed nickel body is subjected to annealing to prepare a porous nickel substrate. Although the porous nickel substrate has a porosity of as high as 95%, its mechanical properties are degraded due to its high porosity.

Thus, since the porous nickel substrate has a porosity of as high as about 95% but its pore diameter is as large as 100 - 500 microns, it is necessary to collect electric currents effectively through an active material.

Presently, therefore, non-sintered, i.e., paste-type electrodes are mainly used as high capacity electrodes.

### Disclosure of Invention

An object of the present invention is to provide an electrode sheet material for secondary batteries from which a battery having a higher level of output and a higher level of capacity than those prepared from electrode sheet materials of the prior art can be manufactured.

Another object of the present invention is to provide an electrode sheet material which can be produced easily at a low cost and is superior in mechanical strength to those of the prior art.

In order to achieve such objects of the present invention, the present inventors have listed the problems in the art as follows.

First, "efficiency" is considered. Efficiency means the ratio with respect to a theoretical value of 289 mAh/g which is a value which assumes that electronic reactions have occurred.

In the case of a sintered electrode, the efficiency is almost 100%, but the efficiency is as low as about 65% in the case of a non-sintered electrode in which only an active material powder is applied to the electrode substrate.

There are many proposals to improve efficiency, such as applying Co compounds as an additive to a substrate, or increasing electrical conductivity by coating nickel hydroxide powder with a Co(OH)₂ layer so as to further increase electrical conductivity of the oxide layer. According to these prior art methods, an efficiency of 100% or more has been achieved. However, it is highly desired to further improve efficiency.

Next, it is also a problem whether charging and discharging are carried out efficiently using an active material held on a substrate of an electrode. It is supposed that the charging and discharging are influenced by the contact surface area between an electrical current collector and an active material on the electrical current collector interface and by the distance between the collector and the active material. Thus, the following countermeasures are conceivable.
(1) The surface area per unit of length of a substrate is increased. This means that the contact area with an active material is increased.
(2) The pore diameter is decreased so that the distance from the peripheral edge of a pore with respect to an active material is decreased. However, since the pore diameter and porosity have a strong influence on the holding force of an active material, the pore diameter cannot be so small, and a suitable one should be employed.

On the basis of the above findings, the inventors manufactured a positive electrode component using a sheet material prepared from a punched plate which has been subjected to pressing, and they found that such a positive electrode could exhibit a great degree of improvement in properties and thereby accomplished the present invention.

An electrode sheet material of the present invention can be used not only as a positive electrode component but also as a negative electrode component. The electrode can be used as a negative electrode of Ni-hydrogen secondary batteries, for example. An electrode in the form of a copper foil is preferred as a negative electrode. Namely, a hydrogen-storing alloy powder was mixed with an electrically conductive agent and a binding agent to prepare a paste. The resulting paste was applied to a punched plate, which was then formed by pressing. The thus-prepared negative electrode was used to prepare a battery which was determined to have a capacity of about 300 - 330 mAh/g, which is 80 - 90% of the theoretical value of 372 mAh/g.

The present inventors achieved the present invention based on the recognition that battery properties are much improved by increasing the surface area of the above-mentioned punched plate.

The present invention can be summarized as follows:
(1) An electrode sheet material for use in secondary batteries, which comprises a punched sheet having projections on a surface thereof.
(2) An electrode sheet material for use in secondary batteries as set forth above in (1) wherein the projections are provided only on one surface of the punched sheet.
(3) An electrode sheet material for use in secondary batteries as set forth above in (1) wherein the projections are provided on both surfaces of the punched sheet.
(4) An electrode sheet material for use in secondary batteries as set forth above in any one of (1) through (3) wherein the punched sheet is made of a steel sheet having a nickel plating layer on a surface thereof.
(5) An electrode sheet material for use in secondary batteries as set forth above in any one of (1) through (3) wherein the punched sheet is made of a copper sheet having a nickel plating layer on a surface thereof.
(6) An electrode sheet material for use in secondary batteries as set forth above in any one of (1) through (5) wherein the projections are formed by embossing.
(7) An electrode sheet material for use in secondary batteries as set forth above in (6) wherein the projections formed by embossing have at least one broken-through portion.
(8) A secondary battery comprising an electrode as set forth above in any one of (1) through (7).

### Brief Description of Drawings

Figure 1 is a flow diagram which shows a manufacturing process of an electrode sheet material of the present invention.
Figure 2 shows schematic illustrations of a sectional view of a projection formed in accordance with the present invention, in which Figure 2(a) shows a sectional view of a corrugated shape, and Figure 2(b) shows a sectional view of a convex-concave shape.
Figures 3(a) and 3(b) are sectional views of a projection with a broken-through portion, each of which is formed in accordance with the present invention.
Figure 4(a) is a plan view of an electrode sheet material prepared in a working example, and Figure 4(b) is a sectional view of the sheet.
Figure 5(a) is a sectional view of a punched sheet which has been subjected to embossing, and Figure 5(b) is also a sectional view of the punched sheet in which broken-through portions are provided.

### Best Mode for Carrying Out the Invention

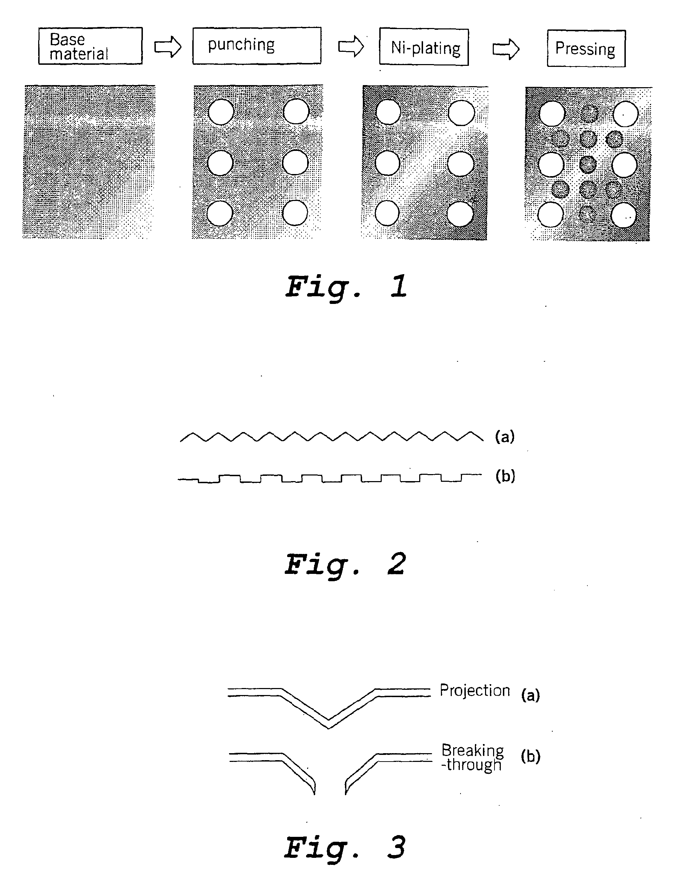

Figure 1 is a flow diagram which shows a manufacturing process for an electrode sheet material for use in secondary batteries of the present invention.

As shown therein, a mother sheet (a SPCC sheet, for example), preferably with a thickness of 0.035 - 0.1mm, is punched with a press. There are no limits with respect to the shape, number, and size of the punched portions so long as they can exhibit properties which are required for an electrode plate. In general, the ratio of the punched area / the area before punching can be in the range of 30 - 50%.

The thus-prepared punched sheet may be a steel sheet (foil) or a copper sheet (foil), It is also conceivable to use a sheet (foil) of another suitable metal or other material.

Nickel plating is then applied to the sheet. The nickel plating may be carried out by electroplating or spraying, or sputtering, and the like. From the view point of economy, electroplating is preferable. In another embodiment, a clad material of a steel or copper sheet (or foil) with a nickel foil may be used. In this specification, for ease of explanation, the formation of a clad embodiment will also be called "plating", Since such nickel plating is already known in the art, a further detailed explanation will be omitted.

Nickel plating can be carried out before punching. However, from a practical standpoint, it is preferable to carry out nickel plating on a punched sheet.

Since the purpose of providing a plating layer is to improve corrosion resistance, electrical conductivity, and uniformity of surface properties, there is no limit on the thickness of the plating layer so long as such a purpose can be achieved. Usually, the thickness may be about 1.5 - 5.0 µm.

After plating, the resulting punched sheet is transferred to a press- forming step to form projections on either a single side or on both sides. The illustrated embodiment shows forming by embossing.

There is no limit on the shape, number, and size of the projections. If possible, it is desirable to provide such projections in the un-punched areas. However, if it is necessary to further increase the surface area, in order to make it easy to design dies therefor, such projections may be provided without restricting them to punched areas.

Such press-forming is carried out as shown in Figure 1 by embossing. Sometimes it is preferable to carry out embossing when an electrode sheet of a high strength is necessary. On the other hand, in order to utilize work-hardening during press-forming, it is desirable in some cases to employ the later-described break-through forming which can achieve a large working ratio.

Figures 2(a) and 2(b) show sectional views of other types of projections, which can be shaped by press-forming into corrugated sections (Fig.2(a)), convex-concave sections (Fig. 2(b), and the like. Thus, the sectional shape of the projections can be a corrugated shape or a convex-concave shape, etc., and either one can be selected in view of the properties to be obtained when the electrode sheet is incorporated into a secondary battery. In this embodiment, it is possible to increase the surface area per unit length, but the forming operation is unstable because it does not involve drawing, which is involved in press-forming by embossing.

In another embodiment, instead of the embossing shown in Figure 1, press-forming followed by break-through may be carried out. This type of forming does not increase the surface area so much as does embossing, but it increases the ability to hold an active material on an electrode.

Figures 3 (a) and (b) show sectional views of a projection subjected to breaking-through. Comparing Figure 3(a), which shows a mere projection, with Figure 3(b), which shows a projection which has been subjected to breaking-through, a projection which has been broken through has a greater degree of work hardening than a mere projection, providing the punched sheet with a greater degree of stiffness. However, when burrs remain after forming, it is thought be troublesome to treat them at a later stage of manufacturing.

Such projections may be provided in either one of the surfaces of a punched sheet. In general, projections formed by embossing may be provided on both surfaces thereof so that effect of enlarging the surface area can be utilized more efficiently. In addition, when such projections have broken-through portions, the effectiveness of the projections as a three-dimensional structure is more marked.

When the electrode sheet material of the present invention is employed as electrodes, due to the facts that a punched sheet can be used and projections can be provided on the surface, and the surface area can be increased, especially by means of embossing, the following advantages can be obtained.
1) An active material placed on both surfaces of an electrode substrate can be joined together through punched holes of the substrate.
2) When the surface area of the electrode substrate is increased, the contact area between the substrate and an active material is also increased to further improve electrical conductivity.

Japanese Patent Application Unexamined Laid-Open Specification Hei 10-106580 discloses an electrode sheet material produced just by embossing. It is stated therein that the ability to hold an active material is poor for punched metals, laths, and metallic screens. It is also stated that since the porosity of punched metals is 50% at most, the ability to hold active material is not enough even if burrs are provided around the punched holes.

The effectiveness of the present invention will be explained more specifically in conjunction with working examples thereof.

### Example:

In this example, as a positive electrode sheet material for a Ni-hydrogen battery, punched sheets having a three-dimensional structure with the following characteristics were manufactured.

Characteristics of punched sheets which were subjected to embossing in this example are as follows:

| | |
|---|---|
| 1) Base Sheet | SPCC Sheet |
| 2) Thickness of the Sheet | 0.035 mm |
| 3) Thickness of Ni Plating | 2.5 micrometers |
| 4) Punching Die | 1.0 mm in diameter |
| 5) Embossing Die | 1.0 mm in diameter |

A previously prepared base sheet was subjected to press-forming by punching as shown in the flow diagram of Figure 1.

Nickel plating was carried out by electrical plating. After plating and annealing, the resulting punched sheet was subjected to press-forming by embossing.

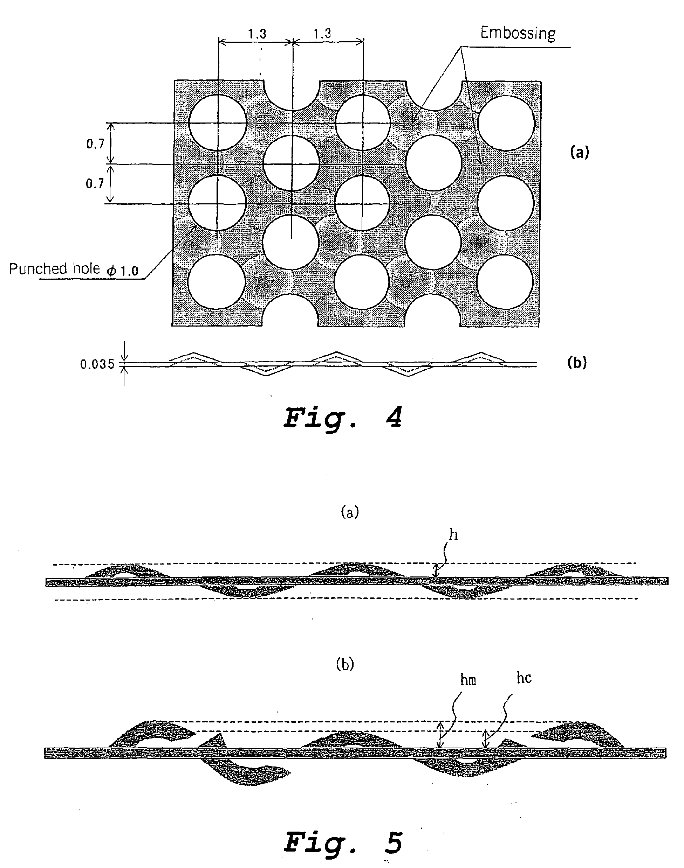

Figure 4(a) is a plan view of the resulting electrode sheet, and Figure 4(b) is a sectional view thereof. It is noted therefrom that embossing was applied to both surfaces of the sheet, and the punched areas were also subjected to embossing. In the figures, the units of measure are mm.

In the illustrated example, it was confirmed that the surface area of the electrode sheet was increased by about 12% in comparison with the case in which just punching was performed. Since battery properties such as battery capacity and power density are determined by surface reactions of electrode sheets, an increase in surface area can be expected to result in an increase in capacity and power output. Based on a simple calculation, it is expected that these properties can be increased by about 12%.

By varying the embossing depth in the embossing, the effect of an increase in surface area was evaluated.

The results are summarized in Table 1. When the embossing depth was 0.52 mm, the resulting projection was not broken through. However, some of the samples had projections, after embossing, with broken-through portions appearing on the side walls (also referred to as "foot portions") of the projections.

**Table 1**

| Sample No. | Embossing Depth (mm) | Increase in Surface Area (%) |
|---|---|---|
| 1 | 0.20 | 8.77 |
| 2 | 0.40 | 16.92 |
| 3 | 0.52 | 23.71 |
| (Note): An increase in surface area is based on the increase with respect to a punched sheet before embossing. | | |

Figure 5 (a) is a sectional view of a punched sheet which was subjected to press-forming by embossing. As shown therein, height h is the embossed depth (mm). As shown in Figure 5(b), when the embossed depth is enlarged beyond a certain depth, i.e., a critical depth (hc), some of the foot portions formed by embossing are locally broken through. The depth of the embossed projections when the foot portion is broken through is the maximum depth (hm).

Since such local broken-through portions are formed in the foot portion during embossing, the height and waviness of the projections are increased and the shapes thereof become complicated. Thus, the effectiveness as a three-dimensional structure becomes marked, i.e., the surface area of the thus-formed punched sheet is markedly increased, and not only the density of an active material on the surface thereof but also the holding strength can be increased.

Similar operations were repeated on steel foils (cold rolled steel sheet) and copper foils to prepare electrode sheet materials, although the characteristics were a little changed. The results are summarized in Tables 2 and 3.

It is apparent from the results shown therein that even though the structure of a secondary battery is the same as in the prior art, e.g., as a conventional Ni-hydrogen secondary battery, or a Ni-Cd secondary battery, a secondary battery using an electrode sheet material of the present invention can exhibit a markedly improved level of battery properties.

**Table 2**

| Characteristics | Embossed Depth 0,40mm | Embossed Depth 0.20 mm |
|---|---|---|
| Sheet thickness (mm) | 0,035 | 0.035 |
| Plating thickness (mm) | 0.005 | 0.0025 |
| Porosity | 43.12% | |
| (i)Surface area after punching (mm²) | 5027.86 | 5027.86 |
| (ii) Increase in surface area by punching (mm²) | 292.69 | 260.17 |
| (iii)Increase in surface area by embossing (mm²) | 558.31 | 148.30 |
| (iv) =(ii) + (iii) Increase in Surface area (mm²) | 851.00 | 408.47 |
| (v) = (i) + (iv) Total surface area (mm²) | 3967.16 | 3524.63 |
| Increase in surface area [(iv)/(i)] ×100(%) | 21.45 | 11.59 |
| Electrical Resistance before embossing (O/m) | 0.10979 | 0.14437 |
| Electrical Resistance after embossing (O/m) | 0.12216 | 0.15412 |
| Increase in electrical resistance | 10.21% | 6.75% |
| (note): Width of sample was 42.0-43.0mm. | | |

**Table 3**

| Characteristics | Embossed Depth 0.15-0.20 mm |
|---|---|
| Thickness of Sheet (mm) | 0.035 |
| Plating thickness (mm) | 0.005 |
| Porosity | 57.91% |
| Electrical Resistance before embossing (O/m) | 0.03906 |
| Electrical Resistance after embossing (O/m) | 0.04063 |
| Increase in electrical resistance | 4.02% |
| (note): Width of sample was 46.78mm. | |

### Effect of the Invention

According to the present invention, therefore, an electrode sheet material with an increased surface area, i.e., improved battery properties can be provided. In addition, since a nickel plating material can be employed in place of nickel, the material costs of the electrode of the present invention can be reduced markedly. Thus, the present invention is particularly advantageous in the industry in view of improvements with respect to battery properties and its economy.

## Claims

1. An electrode sheet material for use in secondary batteries, which comprises a punched sheet having projections on a surface thereof.

2. An electrode sheet material for use in secondary batteries as set forth in claim 1 wherein the projections are provided only on one surface of the punched sheet.

3. An electrode sheet material for use in secondary batteries as set forth in claim 1 wherein the projections are provided on both surfaces of the punched sheet.

4. An electrode sheet material for use in secondary batteries as set forth in any one of claims 1 through 3 wherein the punched sheet is made of a steel sheet having a nickel plating layer on a surface thereof.

5. An electrode sheet material for use in secondary batteries as set forth in any one of claims 1 through 3 wherein the punched sheet is made of a copper sheet having a nickel plating layer on a surface thereof.

6. An electrode sheet material for use in secondary batteries as set forth in any one of claims 1 through 5 wherein the projections are formed by embossing.

7. An electrode sheet material for use in secondary batteries as set forth in claim 6 wherein the projections provided by embossing have at least one broken-through portion.

8. A secondary battery comprising an electrode as ser forth in any one of claims 1 through 7.
